# EUROPÄISCHE PATENTSCHRIFT

(11) **EP 3 951 317 B1**
(45) Veröffentlichungstag und Bekanntmachung des Hinweises auf die Patenterteilung: **11.06.2025**
(21) Anmeldenummer: 21187092.8
(22) Anmeldetag: 22.07.2021
(51) Int. Cl.: G01C 15/02, G01C 15/04, F16B 2/06, G09F 3/12, F16B 21/16, F16B 7/04

(54) **VORRICHTUNG ZUM ANBRINGEN EINER VERMESSUNGSMARKE AN EINEM MESSBOLZEN**
DEVICE FOR ATTACHING A MEASURING MARK TO A MEASURING PIN
DISPOSITIF D'APPLICATION D'UN MARQUAGE DE MESURE À UN BOULON DE MESURE

(30) Priorität: 03.08.2020 DE 102020120415
(43) Veröffentlichungstag der Anmeldung: 09.02.2022
(73) Patentinhaber: Rothbucher, Georg, 83435 Bad Reichenhall (DE)
(72) Erfinder: Rothbucher, Georg, 83435 Bad Reichenhall (DE)
(74) Vertreter: Schaumburg und Partner Patentanwälte mbB

(56) Entgegenhaltungen:
- EP-A1- 2 873 948
- DE-A1- 3 214 998

## Beschreibung

Die Erfindung betrifft eine Vorrichtung zum Anbringen einer Vermessungsmarke an einem Messbolzen. Die Vorrichtung umfasst eine Montagescheibe mit einem Scheibenkörper zur Aufnahme einer Vermessungsmarke und einen von dem Scheibenkörper abstehenden Aufsteckstutzen zum Aufstecken der Vorrichtung auf einem Messbolzen. Ferner betrifft die Erfindung eine Montagehilfe zum Anbringen der Vorrichtung an einem Messbolzen und eine Anordnung, die eine Vorrichtung und eine Montagehilfe zum Anbringen der Vorrichtung an dem Messbolzen umfasst.

Vermessungsmarken werden üblicherweise an ortsfesten Objekten wie Gebäuden oder im Bereich von Bahngleisanlagen an Elektromasten angebracht. Sie dienen dort als Festpunkte, die unter Verwendung an sich bekannter Messsysteme, wie z.B. Totalstationen vermessen werden. Um solche Vermessungsmarken, die beispielsweise in Form eines Prismas und/oder einer mit Reflektoren versehenen Tafel ausgeführt sind, in einer definierten Lage zu montieren, werden üblicherweise standardisierte Messbolzen fest an dem Objekt montiert, um dann an diesem Bolzen die Vermessungsmarke anzubringen.

Dokument EP 2 873 948 A1 offenbart eine Zielmarkenvorrichtung für ein Vermessungssystem mit einem Zielmarkenhalter. Der Zielmarkenhalter umfasst einen Befestigungsabschnitt mit einer Aufnahmebohrung, in den ein Zapfen einführbar ist, und einer Klemmschraube, mit der die Zielmarkenvorrichtung an dem Zapfen fixierbar ist.

Dokument DE 32 14 998 A1 offenbart eine Zielfigur mit einem stabförmigen Träger zur Markierung von Messpunkten. Die Zielfigur kann auf einen Gewindebolzen aufgesetzt werden und mit Hilfe einer Schraube auf diesem fixiert werden.

Die im Stand der Technik weit verbreitete Messtechnik mit Prisma und Totalstation wird mehr und mehr durch automatisierte Messmethoden, wie der Vermessung mit Hilfe von Scannern, Drohnen und sogenannten "Track Monitoring Machines" abgelöst. Dabei ist es vorteilhaft, wenn verschiedene Messsysteme dieselben Vermessungspunkte erfassen. Dadurch ergibt sich die Anforderung eines einfachen und flexiblen Austausches verschiedener Arten von Vermessungsmarken auf bestehenden Messbolzen.

Die Vermessungsmarken sind ferner bei bestimmten Einsätzen, insbesondere im Tunnelbereich von Gleisanlagen, Windgeschwindigkeiten von über 200 km/h ausgesetzt, sodass sich hohe Anforderungen an die Stabilität der Messbolzen selbst und der Verbindung der Messbolzen mit den Vermessungsmarken ergeben.

Es ist Aufgabe der Erfindung, eine Vorrichtung anzugeben, die eine besonders einfache und flexible, dennoch robuste und präzise Anbringung einer Vermessungsmarke an einem

Messbolzen ermöglicht. Ferner ist es Aufgabe der Erfindung eine Anordnung bereitzustellen, die eine Vorrichtung und eine Montagehilfe zum Anbringen der Vorrichtung auf einem Messbolzen umfasst.

Die Erfindung löst diese Aufgabe durch die Vorrichtung gemäß Anspruch 1.

Vorteilhafte Weiterbildungen sind in den jeweiligen Unteransprüchen angegeben.

Die erfindungsgemäße Vorrichtung zum Anbringen einer Vermessungsmarke an einem Messbolzen umfasst eine Montagescheibe mit einem Scheibenkörper zur Aufnahme der Vermessungsmarke und mit einem von dem Scheibenkörper abstehenden und auf den Messbolzen aufsteckbaren Aufsteckstutzen, der zumindest einen Teil des Messbolzens im aufgesteckten Zustand umschließt. Weiterhin umfasst die Montagescheibe mindestens eine Verbindungsstruktur, die ausgebildet ist, den Aufsteckstutzen mit dem Messbolzen mit Hilfe eines mit einem Innengewinde versehenen ersten Befestigungselements und eines mit einem Außengewinde versehenen zweiten Befestigungselements kraftschlüssig und/oder formschlüssig zu verbinden. Dadurch wird eine einfache und sichere Verbindung der Vermessungsmarke mit der Vorrichtung und eine robuste Verbindung der Vorrichtung mit dem Messbolzen sichergestellt.

Erfindungsgemäß Steht die Verbindungsstruktur von dem Scheibenkörper ab und in der Verbindungsstruktur ist das erste Befestigungselement und das zweite Befestigungselement aufnehmbar, derart, dass das erste Befestigungselement und das zweite Befestigungselement in einer Achse orthogonal zu einer Längsachse des Messbolzens angeordnet sind. Dadurch wird eine besonders kompakte Vorrichtung erreicht und eine sichere Verbindung zwischen der Vorrichtung mit dem Messbolzen erreicht.

Es ist besonders vorteilhaft, wenn das erste Befestigungselement über eine in dem Scheibenkörper ausgebildete Öffnung in die Verbindungsstruktur einbringbar ist. Dadurch wird ein besonders kompakter Aufbau der Vorrichtung erreicht sowie eine besonders einfache Handhabung der Vorrichtung, insbesondere während der Montage, erreicht.

Vorteilhaft ist, dass das zweite Befestigungselement in der Verbindungsstruktur aufnehmbar ist und dass das zweite Befestigungselement durch eine in dem Aufsteckstutzen ausgebildete Öffnung gegen den Messbolzen andrückbar ist. Dadurch wird eine besonders sichere Verbindung zwischen dem Aufsteckstutzen und dem Messbolzen erreicht.

Bei einer weiteren bevorzugten Ausführungsform umfasst die Verbindungsstruktur einen ersten Teil und einen zweiten Teil die jeweils von der Umfangsfläche des Aufsteckstutzens abstehen, wobei der Aufsteckstutzen eine Aussparung entlang zumindest eines Teils seiner Längsachse hat und die Aussparung zwischen dem ersten Teil und dem zweiten Teil der Verbindungsstruktur angeordnet ist. Dadurch wird eine besonders dauerhafte und sichere Verbindung zwischen der Vorrichtung und dem Messbolzen erreicht.

Besonders vorteilhaft ist, dass das erste Befestigungselement in dem ersten Teil der Verbindungsstruktur angeordnet ist und das zweite Befestigungselement in dem zweiten Teil der Verbindungsstruktur angeordnet ist, wobei das zweite Befestigungselement durch eine in dem ersten Teil ausgebildete erste Öffnung und eine in dem zweiten Teil der Verbindungsstruktur ausgebildete zweite Öffnung hindurch mit dem ersten Befestigungselement verschraubar ist. Dadurch wird eine Verbindung zwischen Aufsteckstutzen und Messbolzen erreicht, die einen besonders gleichmäßigen Anpressdruck des Aufsetzstutzens auf den Umfang des Messbolzens erreicht. Das führt zu einer besonders sicheren Verbindung.

Das erste Befestigungselement ist vorzugsweise eine Mutter, insbesondere eine selbstsichernde Mutter, das zweite Befestigungselement ist vorzugsweise eine Schraube, insbesondere eine Madenschraube oder eine Gewindeschraube. Dadurch wird eine besonders stabile und dauerhafte Verbindung zwischen den Befestigungselementen sichergestellt.

Ferner ist es vorteilhaft, wenn der Scheibenkörper mindestens ein Positionierungselement, insbesondere eine Einkerbung, zur korrekten Positionierung der Vermessungsmarke aufweist. Dadurch wird eine hohe Vergleichbarkeit der Messergebnisse bei Verwendung verschiedener Messsysteme und dem damit einhergehenden Austausch der Vermessungsmarken sichergestellt.

Bei einer bevorzugten Ausführungsform ist die Vermessungsmarke auf dem Scheibenkörper aufklebbar. Dadurch ist ein besonders einfacher und flexibler Austausch der Vermessungsmarken auf der Vorrichtung möglich.

Erfindungsgemäß sind der Scheibenkörper, der Aufsteckstutzen und die Verbindungsstruktur aus einem einzigen Spritzgussteil geformt. Dadurch wird ein kompakter und kostengünstiger Aufbau der Vorrichtung sichergestellt.

Ferner ist es vorteilhaft, wenn der Scheibenkörper kreisrund ist. Dadurch ist der Scheibenkörper an üblicherweise verwendete Vermessungsmarken angepasst.

Bei einer vorteilhaften Ausführungsform ist in dem Aufsteckstutzen mindestens ein elastisch verformbares Element, insbesondre ein Elastomer, zur Positionierung der Vorrichtung auf dem Messbolzen aufnehmbar. Dadurch wird sichergestellt, dass die Vorrichtung auch mit Messbolzen verbindbar ist, die aufgrund äußerer Einflüsse Verformungen aufweisen.

Es ist besonders vorteilhaft, wenn das elastisch verformbare Element einen Teilbereich, insbesondere einen Bereich zwischen 20% und 50%, vorzugsweise einen Bereich zwischen 25% und 40%, der Innenfläche des Aufsteckstutzens bedeckt. Dadurch wird eine besonders einfache Arretierung der Vorrichtung auf dem Messbolzen ermöglicht.

Ein weiterer Aspekt der Erfindung betrifft eine Montagehilfe (Montagehilfsvorrichtung) zum Anbringen der erfindungsgemäßen Vorrichtung auf einem Messbolzen, bei der die Montagehilfe einen Montagekörper mit einer Aussparung umfasst, in die der Scheibenkörper einbringbar, insbesondere einschiebbar, ist. Dadurch wird eine besonders einfache und stabile Verbindung der Montagehilfe und der Vorrichtung erreicht.

Es ist vorteilhaft, wenn die Oberfläche des Montagekörpers einen Anschlag definiert, gegen den der Messbolzen andrückbar ist. Dadurch wird erreicht, dass der Messbolzen nicht durch die Vorrichtung hindurch ragen kann.

Die Erfindung wird im Folgenden anhand zweier Ausführungsbeispiele unter Bezugnahme auf die Figuren näher beschrieben. Darin zeigt:
- Fig. 1: eine perspektivische Ansicht einer Vorrichtung zum Anbringen einer Vermessungsmarke an einem Messbolzen gemäß einem ersten Ausführungsbeispiel,
- Fig. 2: eine weitere perspektivische Ansicht der Vorrichtung nach Figur 1,
- Fig. 3: eine Draufsicht auf die Vorrichtung nach den Figur 1 und 2,
- Fig. 4: eine Schnittansicht der Vorrichtung nach den Figuren 1 bis 3 entlang der Linie A-A in Figur 3, wobei die Vorrichtung auf einem Messbolzen angebracht ist,
- Fig. 5a: eine Seitenansicht eines vorderen Schaftabschnittes eines weiteren Messbolzens,
- Fig. 5b: eine perspektivische Ansicht einer Vorrichtung gemäß einem zweiten Ausführungsbeispiel, die insbesondere zum Anbringen einer Vermessungsmarke an dem Messbolzen nach Figur 5a geeignet ist,
- Fig. 6: eine Untersicht auf die Vorrichtung nach Figur 5b,
- Fig. 7: eine Schnittansicht der Vorrichtung nach den Figuren 5 und 6 entlang der Linie B-B in Figur 6,
- Fig. 8: eine Draufsicht auf eine Vermessungsmarke und auf die Vorrichtung gemäß dem ersten oder dem zweiten Ausführungsbeispiel,
- Fig. 9: eine Draufsicht auf eine weitere Vermessungsmarke und auf die Vorrichtung gemäß dem ersten oder dem zweiten Ausführungsbeispiel,
- Fig. 10: eine Draufsicht auf eine weitere Vermessungsmarke und auf die Vorrichtung gemäß dem ersten oder dem zweiten Ausführungsbeispiel,
- Fig. 11: eine perspektivische Ansicht einer Montagehilfe zum Anbringen einer Vorrichtung gemäß dem ersten oder dem zweiten Ausführungsbeispiel an einem Messbolzen, und
- Fig. 12: eine vereinfachte perspektivische Darstellung einer Anordnung umfassend eine Montagehilfe nach Figur 11 und einer Vorrichtung gemäß dem ersten oder dem zweiten Ausführungsbeispiel.
- Fig. 13: eine perspektivische Ansicht einer Vorrichtung gemäß eines dritten Ausführungsbeispiels.
- Fig. 14: eine Draufsicht der Vorrichtung nach Figur 13.
- Fig. 15: eine Schnittansicht der Vorrichtung nach Figur 13 und 14.

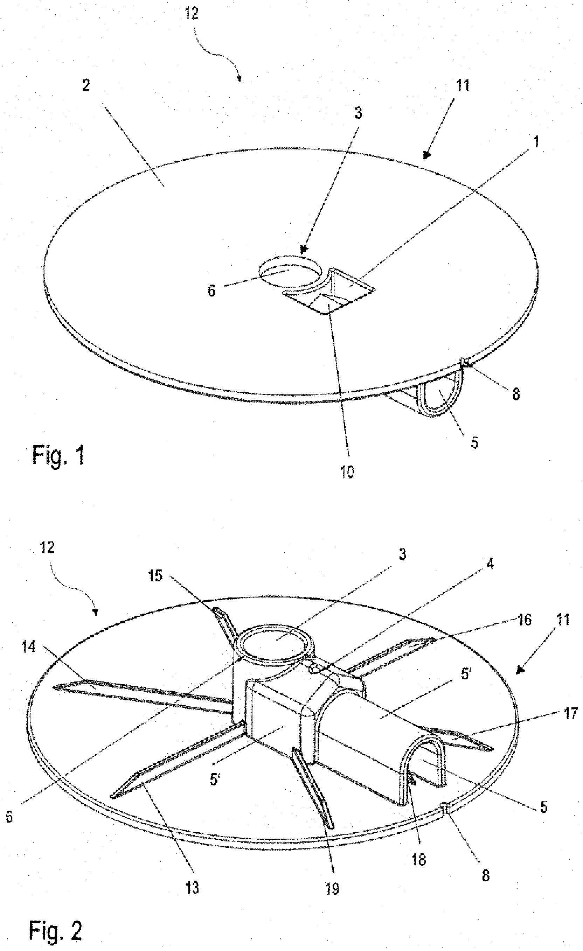

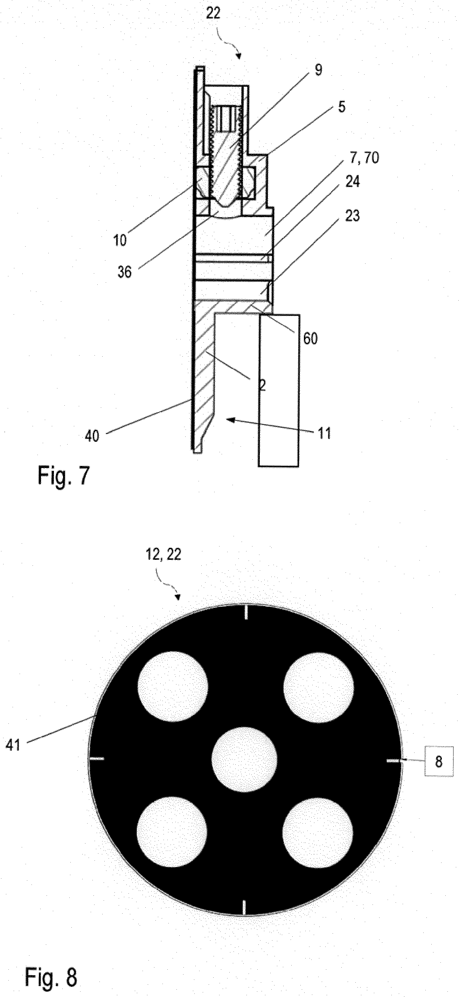

Figur 1 zeigt eine perspektivische Ansicht einer Vorrichtung 12 zum Anbringen einer Vermessungsmarke an einem Messbolzen gemäß einem ersten Ausführungsbeispiel. Die Vorrichtung 12 umfasst eine Montagescheibe 11 mit einem Scheibenkörper 2, auf dem eine Vermessungsmarke aufnehmbar, insbesondere aufklebbar, ist. Die Vermessungsmarke selbst ist in Figur 1 nicht dargestellt, Beispiele hierfür finden sich jedoch nachfolgend in den Figuren 7 bis 10 und sind dort mit den Bezugszeichen 40 bis 43 bezeichnet. Zur korrekten Lagerung der Vermessungsmarke 40 bis 43 auf der Vorrichtung 12 ist in dem Scheibenkörper 2 ein Positionierungselement 8, das beispielsweise als Einkerbung ausgeführt ist, vorgesehen. Die Vermessungsmarke 40 bis 43 weist vorzugsweise ebenfalls mindestens ein Positionierungselement auf, das bei der Befestigung der Vermessungsmarke 40 bis 43 auf dem Scheibenkörper 2 an dem Positionierungselement 8 ausgerichtet wird.

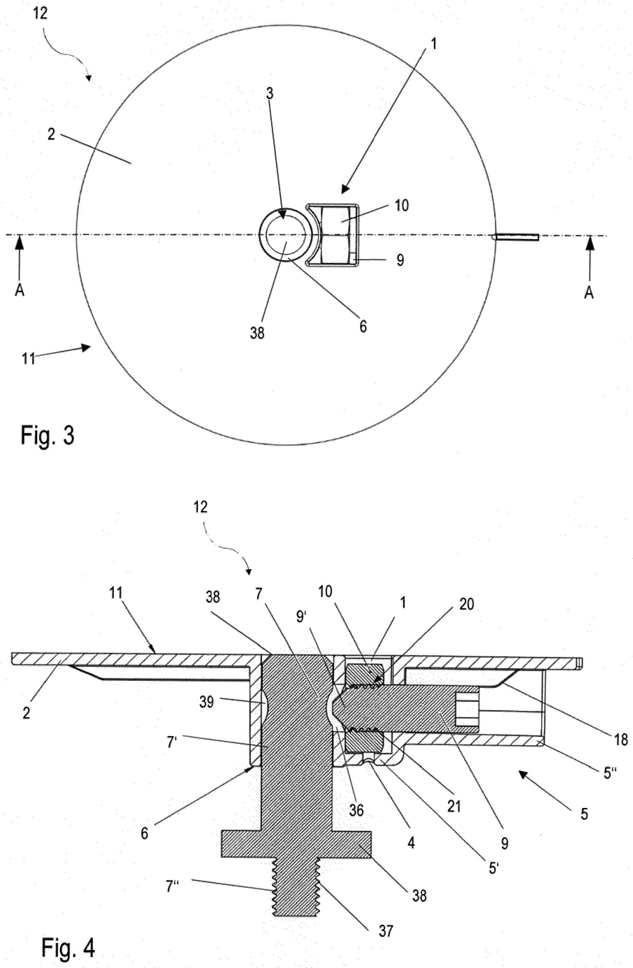

Die Montagescheibe 11 umfasst einen Aufsteckstutzen 6, dessen Innenflächen eine Öffnung 3 zum Aufstecken der Vorrichtung 12 auf einem in Figur 1 nicht dargestellten Messbolzen 7 definieren. Die Verbindung der Vorrichtung 12 mit dem Messbolzen 7 wird nachfolgend in Zusammenhang mit Figur 4 näher erläutert. Der Aufsteckstutzen 6 hat einen kreisrunden Querschnitt, der an den ebenfalls kreisrunden Querschnitt üblicherweise verwendeter Messbolzen 7 angepasst werden kann. Die Montagescheibe 11 ist unter Berücksichtigung standardisierter Abmessungen des Messbolzens 7 so dimensioniert, dass die Vermessungsmarke die gewünschte räumliche Lage relativ zu dem Messbolzen 7 aufweist und somit einen vordefinierten Festpunkt bildet.

Die Montagescheibe 11 umfasst ferner eine Verbindungsstruktur 5, die auch als Gehäuse 5 bezeichnet werden kann, zur Aufnahme einer mit einem Innengewinde 20 versehenen Mutter 10 und einer in Zusammenhang mit Figur 4 beschriebenen, mit einem Außengewinde 21 versehenen Schraube 9. Die Mutter 10 ist vorzugsweise eine selbstsichernde Mutter und die Schraube 9 eine Madenschraube, wobei die Schraube 9 das Gegenstück zur Mutter 10 bildet.

Figur 2 zeigt eine perspektivische Ansicht der Vorrichtung 12 von unten. Die Montagescheibe 11 umfasst sternförmig angeordnete Rippen 13 bis 19. Diese Verstärkungsrippen 13 bis 19 sorgen insbesondere bei größeren Temperaturschwankungen, insbesondere bei der Produktion der Vorrichtung 12, für die die Stabilität der Vorrichtung 12. Die Verbindungsstruktur 5 ist einstückig ausgeformt und umfasst ein vorderes Gehäuseteil 5' zur Aufnahme der Mutter 10 und ein hinteres Gehäuseteil 5" zum Einschub der Schraube 9. Im vorderen Gehäuseteil 5' ist ein Entwässerungsloch 4 vorgesehen, durch welches Regenwasser oder sonstiges in der Verbindungsstruktur 5 angesammeltes Wasser, beispielsweise Kondenswasser, abfließen kann. Die Verbindungsstruktur ist abstehend von dem Scheibenkörper angeordnet.

Figur 3 zeigt eine Draufsicht auf die Vorrichtung 12, bei der eine in dem Scheibenkörper 2 ausgebildete Öffnung 1 sichtbar ist, durch welche die Mutter 10 in den vorderen Gehäuseteil 5' einbringbar ist. Ferner ist eine Folie 38 dargestellt, die die Öffnung 3 abdeckt. Mit Hilfe dieser Folie 38 wird die Klebefläche, auf die die Vermessungsmarke 40 bis 43 anbringbar ist, auf die gesamte Fläche des Scheibenkörpers 2 ausgeweitet.

Figur 4 zeigt eine Schnittansicht der Vorrichtung 12 entlang der Linie A-A in Figur 3, in einem Zustand, in dem die Vorrichtung 12 auf dem Messbolzen 7 angebracht ist. Der Messbolzen 7 ist ein einstückig ausgeführter Metallbolzen, der in der vorliegenden Ausführungsform einen vorderen Schaftabschnitt 7' und einen hinteren Schaftabschnitt 7" unterschiedlichen Durchmessers aufweist. Der vordere Schaftabschnitt 7' dient in nachfolgend beschriebener Weise der Anbringung der Vorrichtung 12. Demgegenüber dient der entgegengesetzte, hintere Schaftabschnitt 7" dazu, den Messbolzen 7 selbst an einem ortsfesten Objekt, z.B. einem Elektromasten, anzubringen. Hierzu verfügt der Schaftabschnitt 7" über ein Außengewinde 37, das in ein in dem Objekt vorgesehenes Innengewinde geschraubt wird. Zwischen dem vorderen Schaftabschnitt 7' und dem hinteren Schaftabschnitt 7" ist eine Mutter 38 angeordnet, die beispielsweise als Sechskant ausgeführt ist. Mit Hilfe der Mutter 38 lässt sich der Messbolzen 7 auf einfache Weise in ein entsprechendes Innengewinde schrauben.

Der vordere Schaftabschnitt 7' weist eine Einkerbung 39 auf, die allgemein zur Befestigung von Vermessungsmarken, insbesondere von Prismen, an dem Messbolzen 7 vorgesehen ist. Der Messbolzen 7 ist beispielsweise ein auf dem Markt unter der Bezeichnung "Leica-Zapfen" weit verbreiteter Steckzapfen der Firma Leica. Es versteht sich von selbst, dass die erfindungsgemäße Vorrichtung auch zum Anbringen an Messbolzen anderer Bauart, insbesondere auch an Messbolzen ohne Einkerbung 39, geeignet ist.

Zum Festsetzen der Vorrichtung 12 auf dem Messbolzen 7 wird zunächst eine Schraubverbindung zwischen der Schraube 9 und der Mutter 10 hergestellt, bei der die Schraubenspitze 9' in dem vorderen Gehäuseteil 5' aufgenommen wird. In einem zweiten Schritt wird die Vorrichtung 12 derart auf den Messbolzen 7 gelegt, dass der Scheibenköper 2 bündig mit der Stirnfläche des Messbolzens 7 ist. In einem dritten Schritt wird die Schraube 9 weiter durch die Mutter 10 geschraubt, bis die Schraubenspitze 9' aus der Verbindungsstruktur 5 durch eine Öffnung 36 des Aufsteckstutzens 6 ragt und im Bereich der Einkerbung 39 gegen den Messbolzen 7 angedrückt wird. Dadurch wird eine robuste Verbindung zwischen der Vorrichtung 12 und dem Messbolzen 7 hergestellt, die insbesondere Auszugskräften von bis zu 20 kg standhält. Ferner ist ein Austausch der Vermessungsmarken 40 bis 43 auf besonders einfache Weise möglich, da hierfür die Vorrichtung 12 nicht von dem Messbolzen 7 abgenommen werden muss, sondern lediglich ein Austausch der auf dem Scheibenkörper 2 festklebbaren Vermessungsmarken 40 bis 43 erfolgen muss.

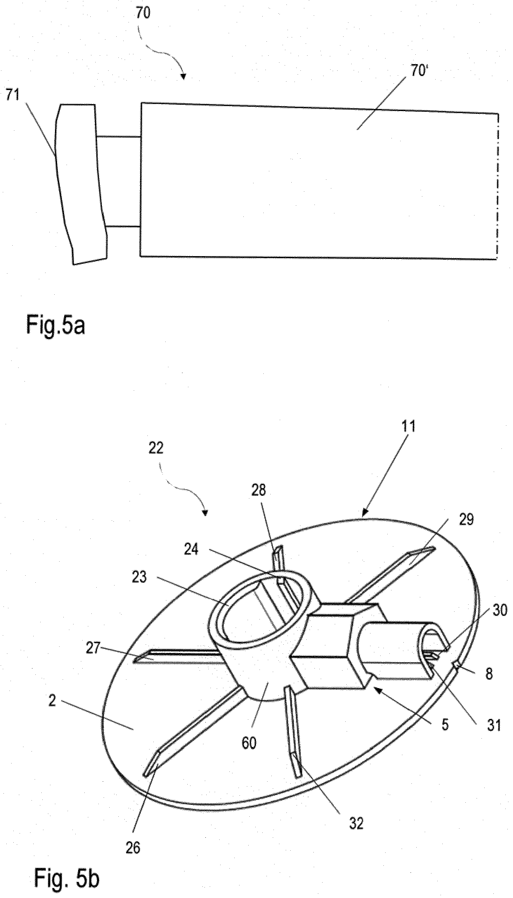

Fig. 5a ist eine Seitenansicht des vorderen Schaftabschnittes 70' eines weiteren Messbolzens 70. Der dargestellte Messbolzen 70 soll eine in der Praxis häufig anzutreffende Verformung im Bereich der Stirnfläche 71 veranschaulichen. Aufgrund dieser Verformung ist ein Anbringen der Vorrichtung 12 nur unter erschwerten Bedingungen möglich.

Figur 5b zeigt deshalb eine Vorrichtung 22 zum Anbringen einer Vermessungsmarke 40 bis 43 an einem Messbolzen 7, 70 gemäß einer zweiten Ausführungsform der Erfindung. Elemente mit gleichem Aufbau oder gleicher Funktion haben dieselben Bezugszeichen. Die Vorrichtung 22 ist dazu geeignet, auch auf dem verformten Messbolzen 70 angebracht zu werden und unterscheidet sich von der Vorrichtung 12 im Wesentlichen dadurch, dass in dem Aufsteckstutzen 60 eine elastisch verformbare Lippe 23 angeordnet ist. Die Lippe 23 bedeckt insbesondere einen Bereich, der ungefähr einem Drittel der Innenfläche des Aufsteckstutzens 60 entspricht.

Trotz der in Figur 5a gezeigten Verformung ist mit Hilfe der Lippe 23 ist eine Arretierung der Vorrichtung 22 auf dem Messbolzen 70 möglich. Beim Verbinden der Vorrichtung 22 mit dem Messbolzen 70 führt eine Bedienperson eine Drehbewegung durch, bis der Scheibenköper 2 bündig mit dem nicht verformten Bereich der Stirnfläche 71 ist. Zwei seitliche Stäbe 24, 25 in dem Aufsteckstutzen 60 definieren dabei jeweils einen Anschlag, gegen den die Lippe 23 andrückbar ist, sodass eine zu starke elastische Verformung der Lippe 23 verhindert wird.

Ein weiteres Unterscheidungsmerkmal der Vorrichtungen 12 und 22 ist die Anordnung der Verstärkungsrippen 26 bis 32.

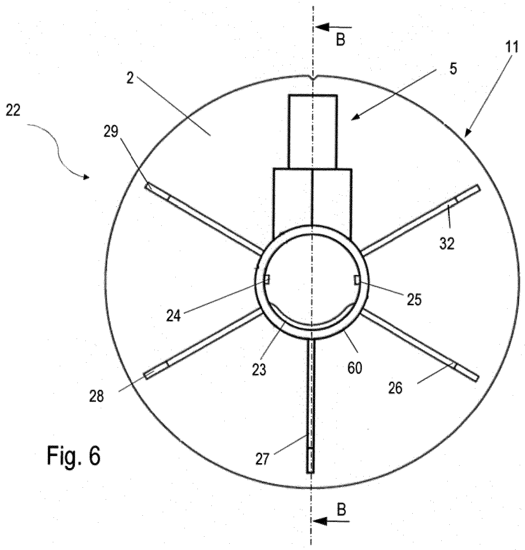

Figur 6 ist eine Untersicht auf die Vorrichtung nach Figur 5b. Figur 7 zeigt eine Schnittansicht der Vorrichtung nach den Figuren 5b und 6 entlang der Linie B-B in Figur 6, in einem Zustand, in dem die Vorrichtung auf einem Messbolzen 7, 70 angebracht ist. Bei der Darstellung nach Figur 7 ist eine Vermessungsmarke 40 auf dem Scheibenkörper 2 aufgeklebt.

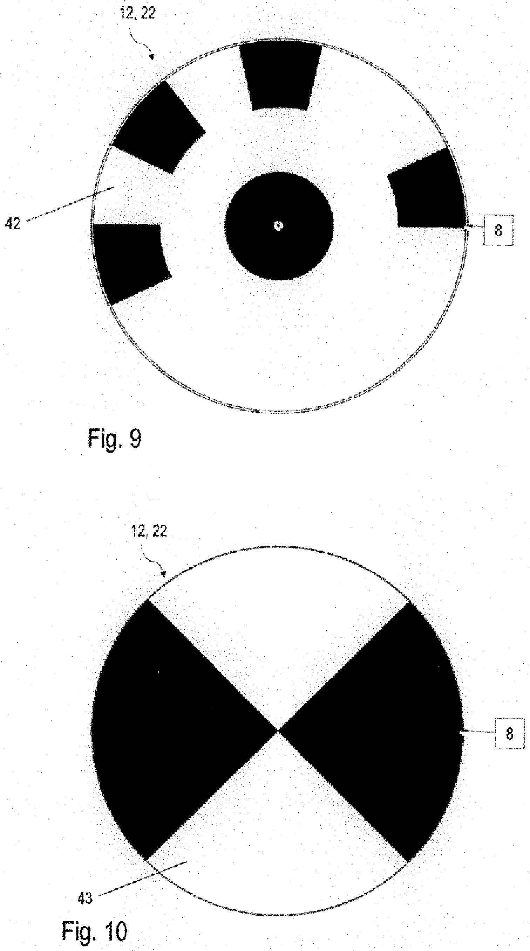

Die Figuren 8 bis 10 zeigen jeweils eine Draufsicht auf die verschiedenen Vermessungsmarken 41 bis 4 3 und auf die Vorrichtung 12, 22, wobei die jeweilige Vermessungsmarke 41 bis 43 auf dem Scheibenkörper 2 der Vorrichtung aufgeklebt ist. Die in Figur 8 gezeigte Vermessungsmarke 41 ist zur Vermessung mit Hilfe sogenannter "Track Monitoring Machines" geeignet. Die in Figur 9 gezeigte Vermessungsmarke 42 ist zur Vermessung mit Hilfe von Drohnen und die in Figur 10 gezeigte Vermessungsmarke 43 ist zur Vermessung mit Hilfe von Scannern geeignet. Es versteht sich von selbst, dass die Art der mit der Vorrichtung 12, 22, 100 verbindbaren Vermessungsmarken nicht auf die in den Figuren 8 bis 10 dargestellten Vermessungsmarken 41 bis 43 beschränkt ist.

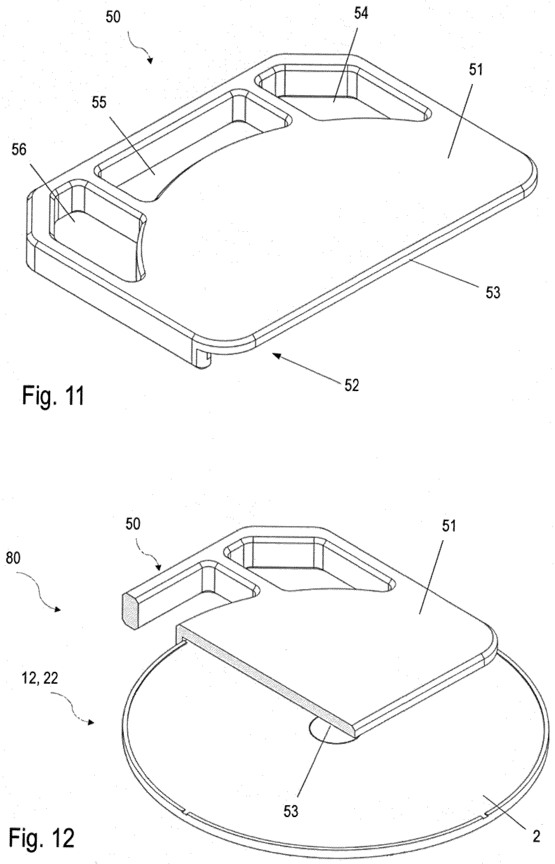

Fig. 11 zeigt eine perspektivische Ansicht einer Montagehilfe 50 zur Anbringung einer Vorrichtung 12, 22 an einem Messbolzen 7, 70. Die Montagehilfe 50 umfasst einen Montagekörper 51 mit einer Aussparung 52, in die die Montagescheibe 2 der Vorrichtung 12, 22, 100 einschiebbar ist. Ferner umfasst der Montagekörper 51 drei Öffnungen 54 bis 56 zur Handhabung der Montagescheibe 50 durch die Bedienperson.

Fig. 12 zeigt eine vereinfachte perspektivische Darstellung einer Anordnung 80 umfassend eine Montagehilfe 50 nach Figur 11 und eine Vorrichtung 12, 22, 100, wobei stellvertretend für die Vorrichtung 12, 22, 100 eine vereinfachte Darstellung der Montagescheibe 2 gezeigt ist. In dem dargestellten Zustand, in dem die Vorrichtung 12, 22, 100 und die Montagehilfe 50 miteinander gekoppelt sind, definiert eine Innenfläche 53 der Aussparung 52 einen Anschlag, gegen den der Messbolzen 7, 70 andrückbar ist. Damit wird sichergestellt, dass sich der Messbolzen 7, 70 beim Anbringen der Vorrichtung 12, 22, 100 nicht durch die Vorrichtung 12, 22, 100 hindurchdrücken kann. Die Anordnung 50 eignet sich insbesondere für das Anbringen der Vorrichtung 12, 22, 100 auf Messbolzen, die keine Einkerbung 39 aufweisen.

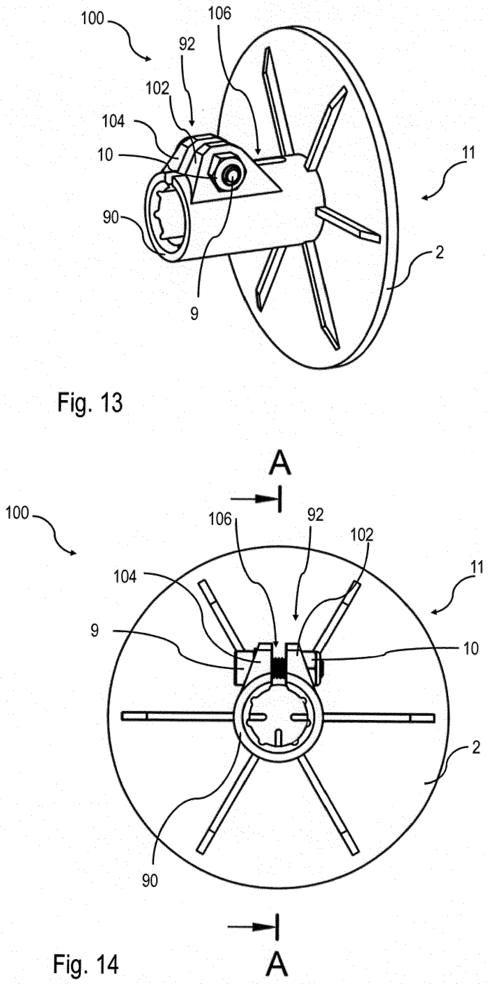

Figuren 13 bis 15 zeigen eine Vorrichtung 100 zum Anbringen einer Vermessungsmarke an einem Messbolzen 7, 70 gemäß einer dritten Ausführungsform. Elemente mit gleichem Aufbau oder gleicher Funktion haben dieselben Bezugszeichen. Die Vorrichtung 100 umfasst einen Aufsteckstutzen 90, an dessen Umfang eine Verbindungsstruktur 92 angeordnet ist. Weiterhin hat der Aufsteckstutzen 90 entlang eines Teils seiner Längsachse eine Aussparung 106. Die Verbindungsstruktur 92 hat zwei Teile, einen ersten Teil 102 und einen zweiten Teil 104. Die Teile 102, 104 sind nebeneinander jeweils auf einer Seite der Aussparung 106 entlang des Umfangs des Aufsteckstutzens 90 angeordnet.

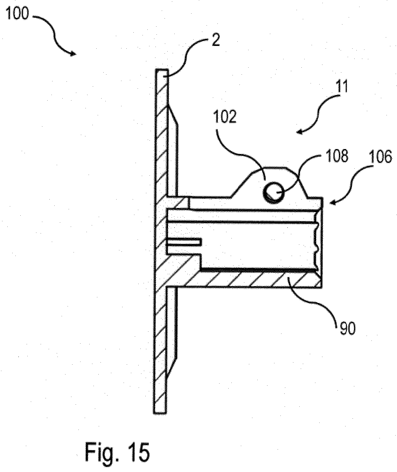

Figur 14 zeigt die Vorrichtung 100 in einer Draufsicht. Der erste Teil 102 und der zweite Teil 104 der Verbindungsstruktur 92 ist mit Hilfe von Befestigungselementen 9, 10 verbunden. Das erste Befestigungselement 10 ist eine in dem ersten Teil 102 eingepasste selbstsichernde Mutter. Das zweite Befestigungselement 9 ist eine Gewindeschraube, die in die Mutter 10 schraubbar ist. Die Gewindeschraube 9 ist dabei durch ein Loch in dem zweiten Teil 104 geführt und anschließend durch ein, in Figur 15 gezeigtes, Loch 108 in dem ersten Teil 102 geführt bevor die Gewindeschraube 9 in die Mutter 10 geschraubt werden kann. Bei Montage der Vorrichtung 100 an einem Messbolzen 7,70 wird der Aufsteckstutzen 90 über den Messbolzen 7, 70 geschoben. Anschließend werden das erste und das zweite Befestigungselement 9, 10 verschraubt. Der Aufsteckstutzen 90 ist verformbar, vorzugsweise elastisch verformbar, somit wird beim Verschrauben die beiden Teile 102, 104 zusammengezogen und die Vorrichtung 100 mit dem Messbolzen 7, 70 zumindest kraftschlüssig verbunden. Dabei wird durch das Verschrauben der Umfang des Aufsteckstutzens 90 verkleinert und eine gleichmäßige Anpresskraft des Aufsteckstutzens 90 auf den Messbolzen 7, 70 erreicht.

Alternativ oder zusätzlich können der Messbolzen 7, 70 und der Aufsteckstutzen 90 eine jeweils komplementäre Form haben, die eine formschlüssige Verbindung erlauben. Die in Figur 14 mit A-A markierte Ebene ist in Figur 15 als Schnittzeichnung der Vorrichtung 100 dargestellt.

Es versteht sich von selbst, dass die Erfindung nicht auf die in den Figuren 1 bis 15 gezeigten Ausführungsformen beschränkt ist. So ist beispielsweise der Aufsteckstutzen 6, 60, 90 insbesondere aufgrund länderspezifischer Anforderungen, in der Länge variierbar. Bei einer alternativen Ausführungsform definiert die Mutter 38 einen Anschlag, gegen den der Aufsteckstutzen 6, 60, 90 andrückbar ist. Ferner ist bei weiteren Ausführungsformen auch die relative Position der Befestigungselemente 9, 10 zum Messbolzen 7 variierbar.

### Bezugszeichenliste

- 1, 3, 36, 54 bis 56: Öffnung
- 2: Scheibenkörper
- 4: Entwässerungsloch
- 5, 92: Verbindungsstruktur
- 5', 5": Gehäuseteil
- 6, 60, 90: Aufsteckstutzen
- 7, 70: Messbolzen
- 7', 7", 70': Schaftabschnitt
- 8: Positionierungselement
- 9: Schraube
- 9': Schraubenspitze
- 10, 38: Mutter
- 11: Montagescheibe
- 12, 22, 100: Vorrichtung
- 13 bis 19, 26 bis 32: Verstärkungsrippen
- 20, 21, 37: Gewinde
- 23: elastisch verformbare Lippe
- 24, 25: Stäbe
- 38: Folie
- 39: Einkerbung
- 40 bis 43: Vermessungsmarke
- 50: Montagehilfe
- 51: Montagekörper
- 52: Aussparung
- 53: Innenfläche
- 71: Stirnfläche
- 80: Anordnung
- 102: erster Teil der Verbindungsstruktur
- 104: zweiter Teil der Verbindungsstruktur
- 106: Aussparung
- 108: Öffnung

## Patentansprüche

1. Vorrichtung (12, 22, 100) zum Anbringen einer Vermessungsmarke (40 bis 43) an einem Messbolzen (7, 70) umfassend:
eine Montagescheibe (11) mit einem Scheibenkörper (2) zur Aufnahme der Vermessungsmarke (40 bis 43) und mit einem von dem Scheibenkörper (2) abstehenden und auf den Messbolzen (7, 70) aufsteckbaren Aufsteckstutzen (6, 60, 90), der zumindest einen Teil des Messbolzens (7, 70) im aufgesteckten Zustand umschließt,
mindestens eine Verbindungsstruktur (5, 92), die ausgebildet ist, den Aufsteckstutzen (6, 60, 90) mit dem Messbolzen (7, 70) mit Hilfe eines mit einem Innengewinde (20) versehenen ersten Befestigungselements (10) und eines mit einem Außengewinde (21) versehenen zweiten Befestigungselements (9) kraftschlüssig und/oder formschlüssig zu verbinden,
wobei die Verbindungsstruktur (5, 92) von dem Scheibenkörper (2) absteht und in der Verbindungsstruktur (5, 92) das erste Befestigungselement (10) und das zweite Befestigungselement (9) aufnehmbar ist, derart, dass das erste Befestigungselement und das zweite Befestigungselement in einer Achse orthogonal zu einer Längsachse des Messbolzens angeordnet sind, und
wobei der Scheibenkörper (2), der Aufsteckstutzen (6, 60, 90) und die Verbindungsstruktur (5, 92) aus einem einzigen Spritzgussteil gefertigt sind.

2. Vorrichtung (12, 22) nach einem der vorhergehenden Ansprüche, **dadurch gekennzeichnet, dass** das erste Befestigungselement (10) über eine in dem Scheibenkörper (2) ausgebildete Öffnung (1) in die Verbindungsstruktur (5) einbringbar ist.

3. Vorrichtung (12, 22) nach einem der vorhergehenden Ansprüche, **dadurch gekennzeichnet, dass** das zweite Befestigungselement (9) in der Verbindungsstruktur (5) aufnehmbar ist und dass das zweite Befestigungselement (9) durch eine in dem Aufsteckstutzen (6, 60) ausgebildete Öffnung (36) gegen den Messbolzen (7, 70) andrückbar ist.

4. Vorrichtung (100) nach Anspruch 1, **dadurch gekennzeichnet, dass** die Verbindungsstruktur (92) einen ersten Teil (102) und einen zweiten Teil (104) umfasst, die jeweils von der Umfangsfläche des Aufsteckstutzens (90) abstehen, wobei der Aufsteckstutzen (90) eine Aussparung (106) entlang zumindest eines Teils seiner Längsachse hat und die Aussparung (106) zwischen dem ersten Teil (102) und dem zweiten Teil (104) der Verbindungsstruktur (92) angeordnet ist.

5. Vorrichtung (100) nach Anspruch 4, **dadurch gekennzeichnet, dass** das erste Befestigungselement (10) in dem ersten Teil (102) der Verbindungsstruktur (92) angeordnet ist und das zweite Befestigungselement (9) in dem zweiten Teil (104) der Verbindungsstruktur (92) angeordnet ist, wobei das zweite Befestigungselement (9) durch eine in dem ersten Teil (102) ausgebildete erste Öffnung (108) und eine in dem zweiten Teil (104) der Verbindungsstruktur (92) ausgebildete zweite Öffnung hindurch mit dem ersten Befestigungselement (10) verschraubar ist.

6. Vorrichtung (12, 22, 100) nach einem der vorhergehenden Ansprüche, **dadurch gekennzeichnet, dass** das erste Befestigungselement (10) eine Mutter, insbesondere eine selbstsichernde Mutter, ist, und/oder dass das zweite Befestigungselement (9) eine Schraube, insbesondere eine Madenschraube oder eine Gewindeschraube, ist.

7. Vorrichtung (12, 22, 100) nach einem der vorhergehenden Ansprüche, **dadurch gekennzeichnet, dass** der Scheibenkörper (2) mindestens ein Positionierungselement (8), insbesondere eine Einkerbung, zur korrekten Positionierung der Vermessungsmarke (40 bis 43) aufweist.

8. Vorrichtung (12, 22, 100) nach einem der vorhergehenden Ansprüche, **dadurch gekennzeichnet, dass** die Vermessungsmarke (40 bis 43) auf dem Scheibenkörper (2) aufklebbar ist.

9. Vorrichtung (22) nach einem der vorhergehenden Ansprüche, **dadurch gekennzeichnet, dass** in dem Aufsteckstutzen (6, 60, 90) mindestens ein elastisch verformbares Element (23), insbesondere ein Elastomer, zur Positionierung der Vorrichtung (22) auf dem Messbolzen (7, 70) aufnehmbar ist.

10. Vorrichtung (22) nach Anspruch 9, **dadurch gekennzeichnet, dass** das elastisch verformbare Element einen Teilbereich, insbesondere einen Bereich zwischen 20% und 50%, vorzugsweise einen Bereich zwischen 25% und 40%, der Innenfläche des Aufsteckstutzens (6, 60, 90) bedeckt.

## Claims

1. Device (12, 22, 100) for attaching a measuring mark (40 to 43) to a measuring pin (7, 70) comprising:
an assembly disc (11) having a disc body (2) for receiving the measuring mark (40 to 43) and having a push-on neck (6, 60, 90) which protrudes from the disc body (2) and is able to be pushed onto the measuring pin (7, 70), and which in the pushed-on state encloses at least a part of the measuring pin (7, 70),
at least one connecting structure (5, 92) which is designed to connect the push-on neck (6, 60, 90) to the measuring pin (7, 70) in a force-fitting and/or form-fitting manner with the aid of a first fastening element (10) provided with an internal thread (20) and a second fastening element (9) provided with an external thread (21),
wherein the connecting structure (5, 92) projects from the disc body (2), and the first fastening element (10) and the second fastening element (9) are able to be received in the connecting structure (5, 92) in such a manner that the first fastening element and the second fastening element are disposed in an axis orthogonal to a longitudinal axis of the measuring pin, and wherein the disc body (2), the push-on neck (6, 60, 90) and the connecting structure (5, 92) are made of a single injection-moulded part.

2. Device (12, 22) according to one of the preceding claims, **characterized in that** the first fastening element (10) is able to be incorporated into the connecting structure (5) by way of an opening (1) formed in the disc body (2).

3. Device (12, 22) according to one of the preceding claims, **characterized in that** the second fastening element (9) is able to be received in the connecting structure (5), and **in that** the second fastening element (9) is able to be pressed against the measuring pin (7, 70) through an opening (36) formed in the push-on neck (6, 60).

4. Device (100) according to Claim 1, **characterized in that** the connecting structure (92) comprises a first part (102) and a second part (104), which in each case project from the circumferential face of the push-on neck (90), wherein the push-on neck (90) has a recess (106) along at least one part of its longitudinal axis and the recess (106) is disposed between the first part (102) and the second part (104) of the connecting structure (92).

5. Device (100) according to Claim 4, **characterized in that** the first fastening element (10) is disposed in the first part (102) of the connecting structure (92), and the second fastening element (9) is disposed in the second part (104) of the connecting structure (92), wherein the second fastening element (9) is able to be screwed to the first fastening element (10) through a first opening (108) formed in the first part (102) and a second opening formed in the second part (104) of the connecting structure (92).

6. Device (12, 22, 100) according to one of the preceding claims, **characterized in that** the first fastening element (10) is a nut, in particular a self-locking nut, and/or **in that** the second fastening element (9) is a screw, in particular a grub screw or a threaded screw.

7. Device (12, 22, 100) according to one of the preceding claims, **characterized in that** the disc body (2) has at least one positioning element (8), in particular a notch, for the correct positioning of the measuring mark (40 to 43).

8. Device (12, 22, 100) according to one of the preceding claims, **characterized in that** the measuring mark (40 to 43) is able to be adhesively bonded on the disc body (2).

9. Device (22) according to any one of the preceding claims, **characterized in that** at least one elastically deformable element (23), in particular an elastomer, for the positioning of the device (22) on the measuring pin (7, 70) is able to be received in the push-on neck (6, 60, 90).

10. Device (22) according to Claim 9, **characterized in that** the elastically deformable element covers a subregion, in particular a region between 20% and 50%, preferably a region between 25% and 40%, of the inner face of the push-on neck (6, 60, 90).

## Revendications

1. Dispositif (12, 22, 100) pour l'application d'un repère de mesure (40 à 43) sur une tige de mesure (7, 70), comprenant :
un disque de montage (11) avec un corps de disque (2) pour recevoir le repère de mesure (40 à 43) et avec une tubulure d'emboîtement (6, 60, 90) dépassant du corps de disque (2) et pouvant être emboîtée sur la tige de mesure (7, 70), qui entoure au moins une partie de la tige de mesure (7, 70) à l'état emboîté,
au moins une structure de liaison (5, 92) qui est réalisée pour relier la tubulure d'emboîtement (6, 60, 90) à la tige de mesure (7, 70) à l'aide d'un premier élément de fixation (10) pourvu d'un filetage intérieur (20) et d'un deuxième élément de fixation (9) pourvu d'un filetage extérieur (21), par adhérence et/ou par complémentarité de forme,
la structure de liaison (5, 92) dépassant du corps de disque (2) et le premier élément de fixation (10) et le deuxième élément de fixation (9) pouvant être reçus dans la structure de liaison (5, 92), de telle sorte que le premier élément de fixation et le deuxième élément de fixation sont agencés dans un axe orthogonal à un axe longitudinal de la tige de mesure, et le corps de disque (2), la tubulure d'emboîtement (6, 60, 90) et la structure de liaison (5, 92) étant fabriqués à partir d'une seule pièce moulée par injection.

2. Dispositif (12, 22) selon l'une quelconque des revendications précédentes, **caractérisé en ce que** le premier élément de fixation (10) peut être introduit dans la structure de liaison (5) par l'intermédiaire d'une ouverture (1) réalisée dans le corps de disque (2).

3. Dispositif (12, 22) selon l'une quelconque des revendications précédentes, **caractérisé en ce que** le deuxième élément de fixation (9) peut être reçu dans la structure de liaison (5) et **en ce que** le deuxième élément de fixation (9) peut être pressé contre la tige de mesure (7, 70) à travers une ouverture (36) réalisée dans la tubulure d'emboîtement (6, 60).

4. Dispositif (100) selon la revendication 1, **caractérisé en ce que** la structure de liaison (92) comprend une première partie (102) et une deuxième partie (104), qui dépassent chacune de la surface périphérique de la tubulure d'emboîtement (90), la tubulure d'emboîtement (90) ayant un évidement (106) le long d'au moins une partie de son axe longitudinal, et l'évidement (106) étant agencé entre la première partie (102) et la deuxième partie (104) de la structure de liaison (92).

5. Dispositif (100) selon la revendication 4, **caractérisé en ce que** le premier élément de fixation (10) est agencé dans la première partie (102) de la structure de liaison (92) et le deuxième élément de fixation (9) est agencé dans la deuxième partie (104) de la structure de liaison (92), le deuxième élément de fixation (9) pouvant être vissé au premier élément de fixation (10) à travers une première ouverture (108) réalisée dans la première partie (102) et une deuxième ouverture réalisée dans la deuxième partie (104) de la structure de liaison (92).

6. Dispositif (12, 22, 100) selon l'une quelconque des revendications précédentes, **caractérisé en ce que** le premier élément de fixation (10) est un écrou, notamment un écrou autobloquant, et/ou **en ce que** le deuxième élément de fixation (9) est une vis, notamment une vis sans tête ou une vis filetée.

7. Dispositif (12, 22, 100) selon l'une quelconque des revendications précédentes, **caractérisé en ce que** le corps de disque (2) présente au moins un élément de positionnement (8), notamment une encoche, pour le positionnement correct du repère de mesure (40 à 43).

8. Dispositif (12, 22, 100) selon l'une quelconque des revendications précédentes, **caractérisé en ce que** le repère de mesure (40 à 43) peut être collé sur le corps de disque (2).

9. Dispositif (22) selon l'une quelconque des revendications précédentes, **caractérisé en ce qu'**au moins un élément élastiquement déformable (23), notamment un élastomère, peut être reçu dans la tubulure d'emboîtement (6, 60, 90) pour le positionnement du dispositif (22) sur la tige de mesure (7, 70).

10. Dispositif (22) selon la revendication 9, **caractérisé en ce que** l'élément élastiquement déformable recouvre une zone partielle, notamment une zone comprise entre 20 % et 50 %, de préférence une zone comprise entre 25 % et 40 %, de la surface intérieure de la tubulure d'emboîtement (6, 60, 90).
